# FASCICULE DE BREVET EUROPEEN

(11) **EP 3 176 281 B1**
(45) Date de publication et mention de la délivrance du brevet: **27.03.2019**
(21) Numéro de dépôt: 15197408.6
(22) Date de dépôt: 02.12.2015
(51) Int. Cl.: C22C 38/04, C22C 38/38, F16F 1/02

(54) **PROCEDE D'AMELIORATION D'UN ALLIAGE FER-NICKEL-CHROME-MANGANESE POUR DES APPLICATIONS HORLOGERES**
VERFAHREN ZUR VERBESSERUNG EINER EISEN-NICKEL-CHROM-MANGAN-LEGIERUNG FÜR UHRENANWENDUNGEN
METHOD FOR IMPROVING AN IRON-NICKEL-CHROMIUM-MANGANESE ALLOY FOR CLOCKMAKING USES

(43) Date de publication de la demande: 07.06.2017
(73) Titulaire: Nivarox-FAR S.A., 2400 Le Locle (CH)
(72) Inventeur: Charbon, Christian, 2054 Chézard-St-Martin (CH)
(74) Mandataire: Giraud, Eric

(56) Documents cités:
- EP-A1- 2 924 514
- EP-A2- 1 795 619
- CH-B1- 703 796
- DE-A1- 19 607 828
- US-A- 3 735 971

## Description

### Domaine de l'invention

L'invention concerne un procédé d'amélioration d'un alliage fer-nickel-chrome-manganèse pour des applications horlogères.

L'invention concerne encore l'utilisation d'un tel alliage pour la réalisation d'un spiral.

### Arrière-plan de l'invention

Les alliages thermo-compensateurs utilisés pour les spiraux d'horlogerie sont en grande majorité issus des travaux de Charles-Edouard Guillaume et basés sur l'Elinvar Fe-Ni-Cr. Des éléments durcissants ont, depuis, été ajoutés : W+C, ou Ti+AI, ou Be, ou Nb, qui ont notamment donné naissance aux alliages « Elinvar », « Ni-Span », « Nivarox », « Isoval ».

Tous ces alliages, qui conviennent à l'application en raison de leurs propriétés mécaniques, sont toutefois ferromagnétiques, et donc sensibles aux champs magnétiques, ce qui est préjudiciable à la marche d'une montre.

Dans les années 1970-1990, des travaux sur des alliages antiferromagnétiques ont été publiés mais n'ont pas donné lieu à des développements industriels. Ces alliages sont quasiment insensibles à l'effet d'un champ magnétique, mais présentent quelques difficultés industrielles et l'arrivée de la crise horlogère des années 80 a stoppé les développements."

Le document EP2924514 au nom de NIVAROX SA décrit un ressort d'horlogerie ou de joaillerie réalisé en un alliage d'acier inoxydable comportant une base constituée de fer et de chrome, arrangé selon une structure austénitique cubique à faces centrées, et comportant du manganèse et de l'azote, et dont la composition en masse de ce ressort est :
- chrome : valeur mini 15%, valeur maxi 25 % ;
- manganèse : valeur mini 5%, valeur maxi 25 % ;
- azote: valeur mini 0,10%, valeur maxi 0.90% ;
- carbone : valeur mini 0.10%, valeur maxi 1,00 % ;
- avec le total (C+N) des teneurs en masse du carbone et de l'azote en proportion du total compris entre 0,40% et 1,50% ;
- avec le rapport (C/N) de la teneur en masse du carbone en proportion du total par rapport à celle de l'azote compris entre 0,125 et 0,550 ;
- impuretés et autres métaux à l'exception du fer: valeur mini 0%, valeur maxi 12,0% ;
- fer : le complément à 100 %.

### Résumé de l'invention

On connaît, notamment par les travaux du Dr.Ing. Manfred Müller, une famille d'alliages antiferromagnétiques particulièrement intéressante, de type Fe-Mn-Ni-Cr.

Il est possible de durcir de tels alliages par adjonction de Be, ou par adjonction de Ti+Al.

Le Be n'est pas souhaitable en raison de sa toxicité. Et l'ajout de Ti+Al est délicat, car Ti et Al réagissent avec le Ni présent dans l'alliage, et en modifient localement la composition, rendant par là-même difficile la maîtrise du coefficient thermique de l'alliage ; de plus, le durcissement structural par précipitation de Ni₃Al et Ti₃Al tend à réduire la ductilité de l'alliage.

L'objet de l'invention est de trouver une alternative permettant un durcissement satisfaisant.

A cet effet, l'invention concerne un procédé d'amélioration d'un alliage fer-nickel-chrome-manganèse pour des applications horlogères, selon la revendication 1.

En résumé, la présente invention permet de durcir un alliage de type Fe-Mn-Ni-Cr, par l'introduction de carbone et d'azote en interstitiel, selon le principe des aciers HIS.

Un tel durcissement par C+N permet le développement d'alliages comportant de bonnes propriétés mécaniques, qui sont antiferromagnétiques, et écologiques.

L'invention concerne encore l'utilisation d'un tel alliage pour la réalisation d'un spiral d'horlogerie.

### Description détaillée des modes de réalisation préférés

L'invention concerne un procédé d'amélioration d'un alliage fer-nickel-chrome-manganèse pour des applications horlogères.

Selon l'invention, on choisit et on élabore un alliage de base comportant, en masse :
- de 4,0% à 13,0% de nickel,
- de 4,0% à 12,0% de chrome,
- de 21,0% à 25,0% de manganèse,
- de 0 à 5,0% de molybdène et/ou de 0 à 5,0% de cuivre,
- le complément en fer,
et on effectue un durcissement de cet alliage, tout en maintenant ses propriétés antiferromagnétiques, par introduction de carbone et d'azote en interstitiel, avec, en proportion de la masse de l'alliage de base :
- de 0,10% à 1,20% de carbone, et/ou
- de 0,10% à 1,20% d'azote.

Plus particulièrement, on ajuste cette introduction de carbone et d'azote, telle que la somme des proportions, en masse de l'alliage de base, du carbone et de l'azote, est comprise entre 0,60% et 0,95%.

Plus particulièrement, on ajuste cette introduction de carbone et d'azote, telle que la somme des proportions, en masse de l'alliage de base, du carbone et de l'azote, est comprise entre 0,75% et 0,95%.

Plus particulièrement, on ajuste cette introduction de carbone et d'azote, telle que la somme des proportions, en masse de l'alliage de base, du carbone et de l'azote, est comprise entre 0,80% et 0,85%.

Plus particulièrement, on ajuste cette introduction de carbone et d'azote, telle que le rapport des pourcentages de carbone et d'azote en masse totale de l'alliage de base est compris entre 0,5 et 2,0.

Plus particulièrement, on ajuste cette introduction de carbone et d'azote, telle que le rapport des pourcentages de carbone et d'azote en masse totale de l'alliage de base est compris entre 1,0 et 1,5.

Plus particulièrement, on choisit cet alliage de base comportant, en masse, au moins 8,0% de chrome.

Plus particulièrement, on incorpore à l'alliage de base, en proportion de la masse de l'alliage de base, entre 0,5% et 5,0% de molybdène et/ou de cuivre afin d'améliorer sa tenue à la corrosion.

Plus particulièrement, on ajoute du ferrochrome à l'azote pour arriver à la bonne composition chimique.

Plus particulièrement, on ajoute du ferromanganèse au carbone pour arriver à la bonne composition chimique.

Plus particulièrement, on ajoute du ferrochrome à l'azote, et du ferromanganèse au carbone pour arriver à la bonne composition chimique.

Plus particulièrement, l'élaboration de cet alliage inclut un procédé de coulée, comportant les étapes suivantes :
- préparer dans les proportions adéquates, d'une part les métaux purs, nickel, chrome, fer, et d'autre part des pré-alliages du type :
   ferrochrome à bas carbone dit Nitrided Low Carbon Ferro Chromium, avec 65% de chrome, 3% d'azote, le reste en fer,
   ferromanganèse à haut carbone dit High Carbon Ferro Manganese, avec 75% de manganèse, 7% de carbone, le reste en fer,
   ferromanganèse à bas carbone dit Low Carbon Ferro Manganese, avec 95% de manganèse, le reste en fer,
- dans un four à induction sous vide, fondre sous pression partielle d'azote le fer, le nickel et le chrome,
- ajouter le ferromanganèse à bas carbone et le ferromanganèse à haut carbone,
- contrôler la température et la maintenir environ 20 °C au-dessus du liquidus de l'alliage, ou à au moins 20 °C au-dessus du liquidus de l'alliage,
- ajouter le ferrochrome à l'azote à bas carbone, qui est la source d'azote principale,
- contrôler la température et la maintenir environ 20 °C au-dessus du liquidus de l'alliage, ou à au moins 20 °C au-dessus du liquidus de l'alliage,
- procéder à la coulée du lingot.

L'invention concerne encore l'utilisation d'un tel alliage pour la réalisation d'un spiral d'horlogerie, notamment un ressort spiral pour oscillateur.

## Revendications

1. Procédé d'amélioration d'un alliage fer-nickel-chrome-manganèse pour des applications horlogères, **caractérisé en ce qu'**on choisit et on élabore un alliage de base comportant, en masse :
- de 4,0% à 13,0% de nickel,
- de 4,0% à 12,0% de chrome,
- de 21,0% à 25,0% de manganèse,
- de 0 à 5,0% de molybdène et/ou de 0 à 5,0% de cuivre
- le complément en fer,
et **en ce qu'**on effectue un durcissement dudit alliage, tout en maintenant ses propriétés antiferromagnétiques, par introduction de carbone et d'azote en interstitiel, avec, en proportion de la masse dudit alliage de base :
- de 0,10% à 1,20% de carbone, et/ou
- de 0,10% à 1,20% d'azote.

2. Procédé selon la revendication 1, **caractérisé en ce qu'**on ajuste ladite introduction de carbone et d'azote, telle que la somme des proportions, en masse dudit alliage de base, du carbone et de l'azote, est comprise entre 0,60% et 0,95%.

3. Procédé selon la revendication 2, **caractérisé en ce qu'**on ajuste ladite introduction de carbone et d'azote, telle que la somme des proportions, en masse dudit alliage de base, du carbone et de l'azote, est comprise entre 0,75% et 0,95%.

4. Procédé selon la revendication 3, **caractérisé en ce qu'**on ajuste ladite introduction de carbone et d'azote, telle que la somme des proportions, en masse dudit alliage de base, du carbone et de l'azote, est comprise entre 0,80% et 0,85%.

5. Procédé selon l'une des revendications 1 à 4, **caractérisé en ce qu'**on ajuste ladite introduction de carbone et d'azote, telle que le rapport des pourcentages de carbone et d'azote en masse totale dudit alliage de base est compris entre 0,5 et 2,0.

6. Procédé selon la revendication 5, **caractérisé en ce qu'**on ajuste ladite introduction de carbone et d'azote, telle que le rapport des pourcentages de carbone et d'azote en masse totale dudit alliage de base est compris entre 1,0 et 1,5.

7. Procédé selon l'une des revendications 1 à 6, **caractérisé en ce qu'**on choisit ledit alliage de base comportant, en masse, au moins 8,0% de chrome.

8. Procédé selon l'une des revendications 1 à 7, **caractérisé en ce qu'**on ajoute du ferrochrome à l'azote pour arriver à la bonne composition chimique

9. Procédé selon l'une des revendications 1 à 8, **caractérisé en ce qu'**on ajoute du ferromanganèse au carbone pour arriver à la bonne composition chimique

10. Procédé selon l'une des revendications 1 à 9, **caractérisé en ce qu'**on ajoute du ferrochrome à l'azote, et du ferromanganèse au carbone, pour arriver à la bonne composition chimique.

11. Procédé selon la revendication 10, **caractérisé en ce que** l'élaboration dudit alliage inclut un procédé de coulée, comportant les étapes suivantes :
- préparer dans les proportions adéquates, d'une part les métaux purs, nickel, chrome, fer, et d'autre part des pré-alliages du type :
ferrochrome à bas carbone dit Nitrided Low Carbon Ferro Chromium, avec 65% de chrome, 3% d'azote, le reste en fer,
ferromanganèse à haut carbone dit High Carbon Ferro Manganese, avec 75% de manganèse, 7% de carbone, le reste en fer,
ferromanganèse à bas carbone dit Low Carbon Ferro Manganese, avec 95% de manganèse, le reste en fer,
- dans un four à induction sous vide, fondre sous pression partielle d'azote le fer, le nickel et le chrome,
- ajouter le ferromanganèse à bas carbone et le ferromanganèse à haut carbone,
- contrôler la température et la maintenir à au moins 20 °C au-dessus du liquidus de l'alliage,
- ajouter le ferrochrome à l'azote à bas carbone,
- contrôler la température et la maintenir à au moins 20 °C au-dessus du liquidus de l'alliage,
- procéder à la coulée du lingot.

12. Utilisation d'un alliage réalisé selon l'une des revendications 1 à 11 pour la réalisation d'un spiral d'horlogerie.

## Patentansprüche

1. Verfahren zur Aufwertung einer Eisen-Nickel-Chrom-Mangan-Legierung für Uhrenanwendungen, **dadurch gekennzeichnet, dass** eine Basislegierung ausgewählt und verarbeitet wird, die in Massenprozent enthält:
- 4,0 % bis 13,0 % Nickel,
- 4,0 % bis 12,0 % Chrom,
- 21,0 % bis 25,0 % Mangan,
- 0 bis 5,0 % Molybdän und/oder 0 bis 5,0 % Kupfer,
- den Rest Eisen,
und dass die Legierung durch Einleiten von Kohlenstoff und Stickstoff in die Zwischenräume mit dem folgenden Anteil an der Masse der Basislegierung gehärtet wird, wobei ihre antiferromagnetischen Eigenschaften beibehalten werden:
- 0,10 % bis 1,20 % Kohlenstoff und/oder
- 0,10 % bis 1,20 % Stickstoff.

2. Verfahren nach Anspruch 1, **dadurch gekennzeichnet, dass** die Einleitung von Kohlenstoff und Stickstoff so eingestellt wird, dass die Summe der Anteile an der Masse der Basislegierung von Kohlenstoff und Stickstoff zwischen 0,60 % und 0,95 % liegt.

3. Verfahren nach Anspruch 2, **dadurch gekennzeichnet, dass** die Einleitung von Kohlenstoff und Stickstoff so eingestellt wird, dass die Summe der Anteile an der Masse der Basislegierung von Kohlenstoff und von Stickstoff zwischen 0,75 % und 0,95 % liegt.

4. Verfahren nach Anspruch 3, **dadurch gekennzeichnet, dass** die Einleitung von Kohlenstoff und Stickstoff so eingestellt wird, dass die Summe der Anteile an der Masse der Basislegierung von Kohlenstoff und Stickstoff zwischen 0,80 % und 0,85 % liegt.

5. Verfahren nach einem der Ansprüche 1 bis 4, **dadurch gekennzeichnet, dass** die Einleitung von Kohlenstoff und Stickstoff so eingestellt wird, dass das Verhältnis der prozentualen Anteile von Kohlenstoff und Stickstoff an der Gesamtmasse der Basislegierung zwischen 0,5 und 2,0 liegt.

6. Verfahren nach Anspruch 5, **dadurch gekennzeichnet, dass** die Einleitung von Kohlenstoff und Stickstoff so eingestellt wird, dass das Verhältnis der prozentualen Anteile von Kohlenstoff und Stickstoff an der Gesamtmasse der Basislegierung zwischen 1,0 und 1,5 liegt.

7. Verfahren nach einem der Ansprüche 1 bis 6, **dadurch gekennzeichnet, dass** die Basislegierung so ausgewählt wird, dass sie mindestens 8,0 Massen-% Chrom enthält.

8. Verfahren nach einem der Ansprüche 1 bis 7, **dadurch gekennzeichnet, dass** dem Stickstoff Ferrochrom zugesetzt wird, um die richtige chemische Zusammensetzung zu erreichen.

9. Verfahren nach einem der Ansprüche 1 bis 8, **dadurch gekennzeichnet, dass** dem Kohlenstoff Ferromangan zugesetzt wird, um die richtige chemische Zusammensetzung zu erreichen.

10. Verfahren nach einem der Ansprüche 1 bis 9, **dadurch gekennzeichnet, dass** dem Stickstoff Ferrochrom und dem Kohlenstoff Ferromangan zugesetzt wird, um die richtige chemische Zusammensetzung zu erreichen.

11. Verfahren nach Anspruch 10, **dadurch gekennzeichnet, dass** die Ausarbeitung der Legierung ein Gießverfahren beinhaltet, das die folgenden Schritte umfasst:
- Bereitstellen einerseits der reinen Metalle Nickel, Chrom und Eisen und andererseits der Vorlegierungen des folgenden Typs in den geeigneten Anteilen:
Ferrochrom mit niedrigem Kohlenstoffgehalt, genannt Nitrided Low Carbon Ferro Chromium, mit 65 % Chrom, 3 % Stickstoff und dem Rest Eisen,
Ferromangan mit hohem Kohlenstoffgehalt, genannt High Carbon Ferromanganese, mit 75 % Mangan, 7 % Kohlenstoff und dem Rest Eisen,
Ferromangan mit niedrigem Kohlenstoffgehalt, genannt Low Carbon Ferro Manganese, mit 95 % Mangan und dem Rest Eisen,
- Schmelzen von Eisen, Nickel und Chrom in einem Vakuum-Induktionsofen unter Stickstoff-Partialdruck,
- Zusetzen von Ferromangan mit niedrigem Kohlenstoffgehalt und von Ferromangan mit hohem Kohlenstoffgehalt,
- Regeln und Halten der Temperatur mindestens 20 °C über dem Liquidus der Legierung,
- Zusetzen von Ferrochrom zum Stickstoff mit niedrigem Kohlenstoffgehalt,
- Regeln und Halten der Temperatur mindestens 20 °C über dem Liquidus der Legierung,
- Gießen des Blocks.

12. Verwendung einer gemäß einem der Ansprüche 1 bis 11 hergestellten Legierung für die Herstellung einer Uhrenspirale.

## Claims

1. Method for improving an iron-nickel-chromium-manganese alloy for timepiece applications, **characterised in that** a base alloy is chosen and produced, comprising by mass:
- from 4.0% to 13.0% of nickel,
- from 4.0% to 12.0% of chromium,
- from 21.0% to 25.0% of manganese,
- from 0 to 5.0% of molybdenum and/or from 0 to 5.0% of copper,
- the complement in iron,
and **in that** hardening of said alloy is effected whilst maintaining its antiferromagnetic properties, by introduction of carbon and of nitrogen interstitially, with, by proportion of mass of said base alloy:
- from 0.10% to 1.20% of carbon, and/or
- from 0.10% to 1.20% of nitrogen.

2. Method according to claim 1, **characterised in that** said introduction of carbon and of nitrogen is adjusted, so that the sum of the proportions, by mass of said base alloy, of the carbon and of the nitrogen, is between 0.60% and 0.95%.

3. Method according to claim 2, **characterised in that** said introduction of carbon and of nitrogen is adjusted, so that the sum of the proportions, by mass of said base alloy, of the carbon and of the nitrogen, is between 0.75% and 0.95%.

4. Method according to claim 3, **characterised in that** said introduction of carbon and of nitrogen is adjusted, so that the sum of the proportions, by mass of said base alloy, of the carbon and of the nitrogen, is between 0.80% and 0.85%.

5. Method according to one of claims 1 to 4, **characterised in that** said introduction of carbon and of nitrogen is adjusted, so that the ratio of the percentages of carbon and of nitrogen, by total mass of said base alloy, is between 0.5 and 2.0.

6. Method according to claim 5, **characterised in that** said introduction of carbon and of nitrogen is adjusted, so that the ratio of the percentages of carbon and of nitrogen, by total mass of said base alloy, is between 1.0 and 1.5.

7. Method according to one of claims 1 to 6, **characterised in that** said base alloy is chosen comprising, by mass, at least 8.0% of chromium.

8. Method according to one of claims 1 to 7, **characterised in that** ferrochromium is added to the nitrogen in order to arrive at the correct chemical composition.

9. Method according to one of claims 1 to 8, **characterised in that** ferromanganese is added to the carbon in order to arrive at the correct chemical composition.

10. Method according to one of claims 1 to 9, **characterised in that** ferrochromium is added to the nitrogen, and ferromanganese to the carbon, in order to arrive at the correct chemical composition.

11. Method according to claim 10, **characterised in that** production of said alloy includes a casting process, comprising the following steps:
- preparing, in adequate proportions, on the one hand, pure metals, nickel, chromium, iron and, on the other hand, pre-alloys of the type:
low carbon ferrochromium, termed Nitrided Low Carbon Ferro Chromium, with 65% of chromium, 3% of nitrogen, the remainder in iron,
high carbon ferromanganese, termed High Carbon Ferro Manganese, with 75% of manganese, 7% of carbon, the remainder in iron,
low carbon ferromanganese, termed Low Carbon Ferro Manganese, with 95% of manganese, the remainder in iron,
- in a vacuum induction furnace, melting, under nitrogen partial pressure, iron, nickel and chromium,
- adding the low carbon ferromanganese and the high carbon ferromanganese,
- controlling the temperature and maintaining it at at least 20°C above the liquidus of the alloy,
- adding the ferrochromium to the low carbon nitrogen,
- controlling the temperature and maintaining it at at least 20°C above the liquidus of the alloy,
- implementing the casting of the ingot.

12. Use of an alloy produced according to one of claims 1 to 11, for producing a timepiece balance spring.
